# EUROPEAN PATENT APPLICATION

(11) **EP 1 739 534 A2**
(43) Date of publication of application: **03.01.2007**
(21) Application number: 06013602.5
(22) Date of filing: 30.06.2006
(51) Int. Cl.: G06F 3/048

(54) **Graphical user interface device, operating input processing method, and two-way communication apparatus**

(30) Priority: 30.06.2005 JP 2005192734; 11.08.2005 JP 2005233587
(71) Applicant: SONY CORPORATION, Tokyo (JP)
(72) Inventor: Ukai, Atsuyuki, Shinagawa-ku Tokyo (JP)
(74) Representative: Körber, Martin Hans

(57) **Abstract**

Disclosed herein is a graphical user interface device including a display unit (12) for displaying a part of a graphical user interface, an operation input unit (51) for receiving a user operation, and a control unit (50) for performing a process corresponding to the part according to the user operation, wherein the control unit (50) selectively performs one of changing of an indicated part and selection of an indicated part in response to the user operation, and when a part is selected, the control unit (50) performs a process corresponding to the selected part.

## Description

### CROSS REFERENCES TO RELATED APPLICATIONS

The present invention contains subject matter related to Japanese Patent Application JP 2005-233587 filed in the Japanese Patent Office on August 11, 2005, the entire contents of which being incorporated herein by reference.

### BACKGROUND OF THE INVENTION

### 1. Field of the Invention

The present invention relates to a graphical user interface device, an operating input processing method, and a two-way communication apparatus. Particularly, the present invention performs only changing of a selectable part of a graphical user interface and selection of a selectable part in response to a user operation, and when a part is selected, performs a process corresponding to the selected part, thus enabling for example a two-way communication using a common graphical user interface in either of a case of using a pointing device and a case of using a keyboard.

### 2. Description of the Related Art

A system that makes it possible to perform two-way communication while viewing the face of another person by transmitting an image picked up at each of two points at a distance from each other to the other point via a network and displaying the image, for example a videoconferencing system is spreading.

Such a videoconferencing system uses a graphical user interface that displays icons showing personal information of conference attendees in a conference room (first conference room) of an own self and a conference room (second conference room) of another person and icons showing devices in the conference room of the own self and the conference room of the other person before a conference is started, as in Japanese Patent Laid-open No. 2001-331429, for example.

### SUMMARY OF THE INVENTION

When the graphical user interface is used, a pointing device, a keyboard, a remote control device having similar functions to those of the pointing device and the keyboard, and the like are utilized as user operation inputting unit.

When the keyboard is used, information corresponding to a key operation, for example a character, a number, a symbol or the like can be input. It is also possible to move a cursor on a screen according to a key operation, and indicate or select a desired part of the graphical user interface. When the pointing device is used, on the other hand, while it is possible to move a pointer on the screen, and indicate or select a desired part of the graphical user interface, a character, a number, a symbol or the like cannot be input directly from the pointing device.

Thus, when the pointing device and the keyboard are made usable, a graphical user interface supposing the use of the keyboard and a graphical user interface supposing the use of the pointing device are provided separately from each other. In addition, supposing the use of both the pointing device and the keyboard, a graphical user interface is configured with a mixture of parts to be operated by the pointing device and parts to be operated by the keyboard.

However, when a graphical user interface supposing the use of the keyboard and a graphical user interface supposing the use of the pointing device are provided separately from each other, the number of man-hours for designing the graphical user interfaces, cost and the like are increased. If parts to be operated by the pointing device and parts to be operated by the keyboard are mixed with each other, some parts cannot be operated when only one of the pointing device and the keyboard is used.

Accordingly, the present invention provides a graphical user interface device, an operating input processing method, and a two-way communication apparatus that make it possible to operate parts of a graphical user interface similarly when using either of a pointing device and a keyboard.

In a graphical user interface device, an operating input processing method, and a two-way communication apparatus according to embodiments of the present invention, one of changing of an indicated part and selection of an indicated part is performed selectively in response to a user operation, and a process corresponding to a selected part is performed. The state of parts is limited to states corresponding only to changing of an indicated part and selection of an indicated part. The process corresponding to the part does not need user operations of other than change and selection.

According to embodiments of the present invention, one of changing of an indicated part and selection of an indicated part is performed selectively in response to a user operation, and a process corresponding to a selected part is performed. Therefore, parts of a graphical user interface can be operated similarly when either of the pointing device and the keyboard is used as an operation input unit for receiving a user operation, and thus the two-way communication apparatus can be operated or set easily. In addition, since a graphical user interface supposing the use of the pointing device and a graphical user interface supposing the use of the keyboard do not need to be provided individually, graphical user interface design can be performed efficiently.

The above and other features and advantages of the present invention will become apparent from the following description when taken in conjunction with the accompanying drawings which illustrate preferred embodiments of the present invention by way of example.

### BRIEF DESCRIPTION OF THE DRAWINGS

FIG. 1 is a diagram showing an external appearance of a two-way communication apparatus;
FIG. 2 is a diagram showing a configuration of the two-way communication apparatus;
FIG. 3 is a diagram showing a remote control device;
FIG. 4 is a diagram showing a graphical user interface screen;
FIGS. 5A to 5D are diagrams of assistance in explaining operation when a pointing device is used;
FIGS. 6A to 6F are diagrams of assistance in explaining operation when a keyboard is used;
FIGS. 7A to 7D are diagrams of assistance in explaining menu selecting operation when the pointing device is used;
FIGS. 8A to 8D are diagrams of assistance in explaining menu selecting operation when the keyboard is used; and
FIG. 9 is a diagram showing a call screen.

### DETAILED DESCRIPTION OF THE PREFERRED EMBODIMENTS

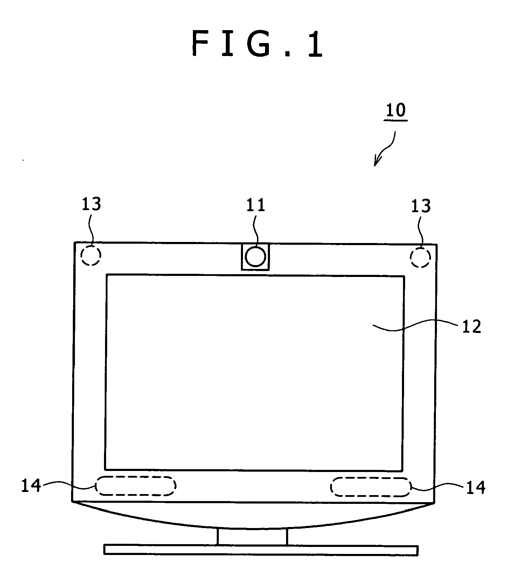

An embodiment of the present invention will hereinafter be described with reference to the drawings. FIG. 1 is a front view of a two-way communication apparatus 10 used in a system for performing two-way communication, for example a videoconferencing system.

An image pickup unit 11, a display unit 12, a microphone 13, a speaker 14 and the like are provided integrally with each other in the two-way communication apparatus 10. In addition, though not shown in the figure, a codec, a communication unit and the like are included in the casing of the two-way communication apparatus 10. This two-way communication apparatus 10 allows operation change, various settings and the like using a graphical user interface.

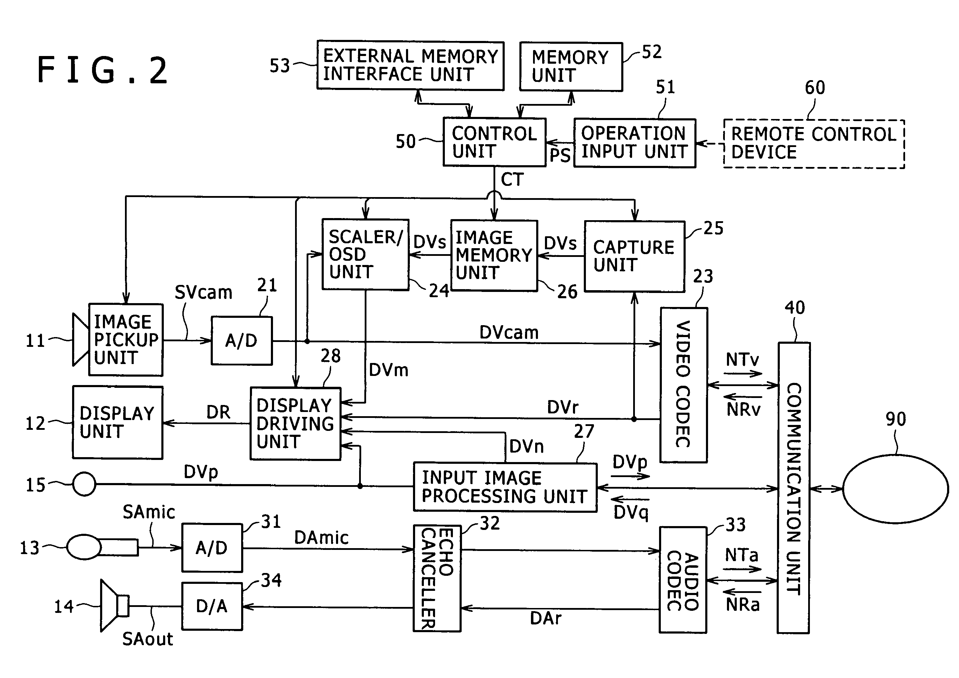

FIG. 2 shows a configuration of the two-way communication apparatus 10. The image pickup unit 11 is formed using a CMOS image pickup element, a CCD image pickup element or the like. The image pickup unit 11 generates a video signal SVcam of a picked-up image, and then supplies the video signal SVcam to an A/D converter unit 21. In addition, the image pickup unit 11 has an image pickup direction varying function and a zoom function to perform a tilting operation, a panning operation, and a zoom ratio changing operation on the basis of a control signal CT from a control unit 50 to be described later.

The A/D converter unit 21 converts the video signal SVcam into a digital video signal DVcam. The A/D converter unit 21 then supplies the video signal DVcam to a video codec 23 and a scaler/OSD (On-Screen Display) unit 24. The video codec 23 generates a video encoded transmission signal NTv by encoding (compressing) the video signal DVcam. The video codec 23 then supplies the video encoded transmission signal NTv to a communication unit 40. In addition, the video codec 23 decodes (decompresses) a video encoded received signal NRv supplied from the communication unit 40. The video codec 23 supplies a video signal DVr obtained by the decoding to a capture unit 25 and a display driving unit 28.

The scaler/OSD unit 24 performs a process of changing the size of the image based on the video signal DVcam and a still image stored in an image memory unit 26 to be described later and a process of generating an image on the basis of character information and color information on the basis of the control signal CT from the control unit 50 to be described later. In addition, on the basis of the control signal CT from the control unit 50 to be described later, the scaler/OSD unit 24 for example generates a top screen, an address book screen, various menu screens, and a communication screen when communication is performed with an image of a person at another end of the communication being displayed by using the generated image, the image based on the video signal DVcam, the still image, an image changed in size, and the like as occasion arises. Further, the scaler/OSD unit 24 supplies a video signal DVm of various screens such as menu screens and the like to the display driving unit 28.

The capture unit 25 captures the video signal DVr supplied from the video codec 23, generates a still image signal DVs, and then supplies the still image signal DVs to the image memory unit 26. The image memory unit 26 has a capacity for storing a large number of still image signals. The image memory unit 26 stores the still image signal DVs supplied from the capture unit 25. In addition, the image memory unit 26 supplies the still image signal DVs stored therein to the scaler/OSD unit 24.

An input terminal 15 is to input an image generated by a computer device or the like (not shown). A video signal DVp input from the computer device or the like to the input terminal 15 is supplied to an input image processing unit 27 and the display driving unit 28.

The input image processing unit 27 is connected with the communication unit 40. The input image processing unit 27 supplies the video signal DVp from the input terminal 15 to the communication unit 40. In addition, the input image processing unit 27 generates a new video signal DVn on the basis of the video signal DVp supplied from the input terminal 15 or a video signal DVq supplied from the communication unit 40. The input image processing unit 27 then supplies the video signal DVn to the display driving unit 28.

The display driving unit 28 selects one or a plurality of video signals of the video signal DVr supplied from the video codec 23, the video signal DVm supplied from the scaler/OSD unit 24, the video signal DVp supplied from the input terminal 15, and the video signal DVn supplied from the input image processing unit 27 on the basis of the control signal CT supplied from the control unit 50. The display driving unit 28 generates a driving signal DR on the basis of the selected video signal(s). The display driving unit 28 then supplies the driving signal DR to the display unit 12. In addition, the display driving unit for example changes the size of an image based on the selected video signal(s) as occasion arises.

The display unit 12 is formed by using a liquid crystal display element, a plasma display panel, a cathode-ray tube or the like. The display unit 12 performs display operation on the basis of the driving signal DR supplied thereto. The display unit 12 displays an image on the basis of an instruction from the control unit 50.

The microphone 13 supplies a generated audio signal SAmic to an A/D converter unit 31. The A/D converter unit 31 converts the audio signal SAmic into a digital audio signal DAmic. The A/D converter unit 31 then supplies the audio signal DAmic to an audio codec 33 via an echo canceller 32. The audio codec 33 generates an audio encoded transmission signal NTa by encoding (compressing) the supplied audio signal DAmic. The audio codec 33 then supplies the audio encoded transmission signal NTa to the communication unit 40. In addition, the audio codec 33 decodes (decompresses) an audio encoded received signal NRa supplied from the communication unit 40. The audio codec 33 supplies an audio signal DAr obtained by the decoding to a D/A converter unit 34 via the echo canceller 32. The D/A converter unit 34 converts the supplied audio signal DAr into an analog audio signal SAout. The D/A converter unit 34 then supplies the audio signal SAout to the speaker 14. The speaker 14 outputs audio on the basis of the audio signal SAout.

The communication unit 40 is connected to a network 90. The communication unit 40 supplies the signals supplied from the video codec 23 and the audio codec 33 and the signal supplied from the input image processing unit 27 to a two-way communication apparatus of a desired person at another end. In addition, the communication unit 40 supplies a video encoded received signal NRv directed to the own apparatus to the video codec 23, and supplies an audio encoded received signal NRa directed to the own apparatus to the audio codec 33.

The control unit 50 is connected with an operation input unit 51, a memory unit 52, and an external memory interface unit 53. The operation input unit 51 receives user operations. The operation input unit 51 is formed by using a pointing device, a keyboard or the like. When a remote control device 60 having functions of a pointing device, a keyboard or the like is used, the operation input unit 51 is provided with a receiving unit for receiving a control signal from the remote control device 60. The operation input unit 51 generates an operation signal PS according to an operation of the pointing device, the keyboard or the like or on the basis of the control signal received by the receiving unit. The operation input unit 51 supplies the operation signal PS to the control unit 50.

The memory unit 52 is formed by a rewritable nonvolatile memory. The memory unit 52 stores other end person information on a person at another end with whom to have a conference.

The external memory interface unit 53 is to enable recording media such as a memory card and the like (not shown) to be connected to the two-way communication apparatus 10. When other end person information and a still image are registered on the recording media, and the recording media are loaded into the external memory interface unit 53, it is possible to have a private conference with a person at another end who is not registered in the memory unit 52. It is also possible to transmit a private still image. Further, storing a new program on the recording media makes it possible to update or extend functions of the two-way communication apparatus 10.

The control unit 50 generates a control signal CT using the operation signal PS generated by the operation input unit 51, the other end person information registered in the memory unit 52, the information stored on the recording media loaded into the external memory interface unit 53, and the like. The control unit 50 controls each part by the control signal CT to perform videoconferencing with a desired person at another end.

In addition, the control unit 50 uses the other end person information registered in the memory unit 52 and on the recording media loaded in the external memory interface unit 53, and the still images stored in the image memory unit 26. Further, the control unit 50 controls the operation of the scaler/OSD unit 24 and the display driving unit 28 to display parts of a graphical user interface on the display unit 12. Further, the control unit 50 indicates and selects a part in response to a user operation received by the operation input unit 51 to allow operation change, various settings and the like in the two-way communication apparatus 10, whereby a graphical user interface is formed.

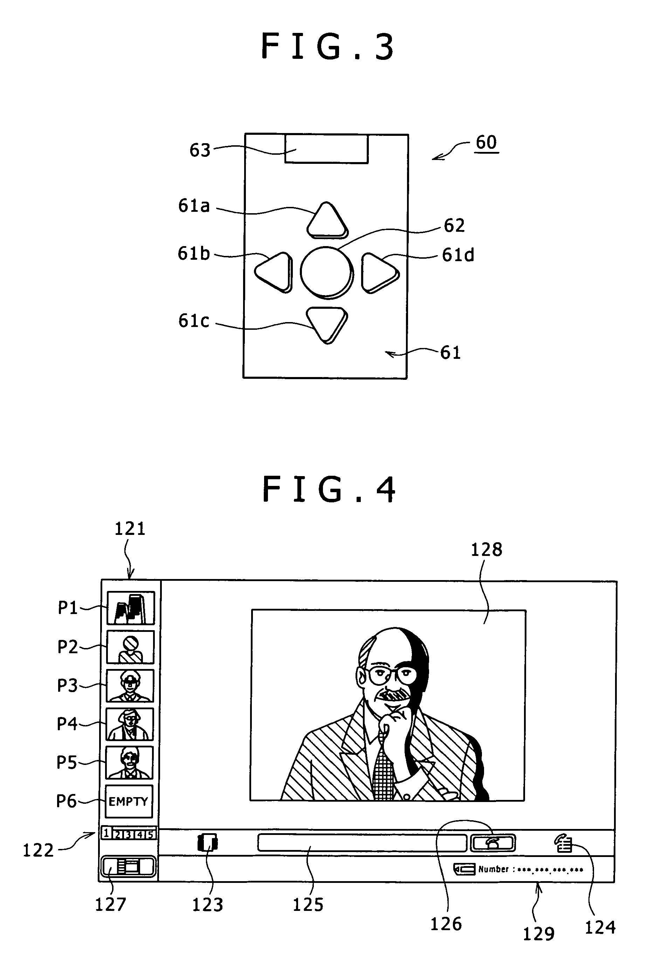

When the above-described remote control device 60 has a function of a keyboard, for example, the remote control device 60 has at least a cursor moving key for changing an indicated part by moving a cursor and an enter key for selecting a part indicated by the cursor. FIG. 3 shows an external appearance of the remote control device 60. Incidentally, FIG. 3 represents a case where the remote control device 60 has a cursor moving key 61 for moving the cursor in an upward direction, a downward direction, a left direction, and a right direction, and an enter key 62 for selecting a part indicated by the cursor. This remote control device 60 has a radio transmission unit 63 for transmitting a control signal indicating an operated key using infrared rays or the like. Incidentally, the cursor moving key 61 includes an upward direction cursor moving key 61a, a left direction cursor moving key 61b, a downward direction cursor moving key 61c, and a right direction cursor moving key 61d.

In the graphical user interface of the thus formed two-way communication apparatus 10, one of changing of an indicated part and selection of an indicated part is performed selectively in response to a user operation, and a part operation is enabled in either of cases of using a pointing device and using a keyboard.

In addition, in the two-way communication apparatus 10, the state of parts is limited to states corresponding only to changing of an indicated part and selection of an indicated part. For example, the state of parts is limited to states of a normal, a focus-in, a push, and a select. The normal represents a state before indication. The focus-in represents a state of being indicated by the pointer or the cursor. The push indicates that a selecting operation is performed. The select represents a selected state after the selecting operation is performed. By thus limiting the state of parts, one of changing of an indicated part and selection of an indicated part can be performed correctly, and even when an operation of inputting a character, a number, or a symbol on the keyboard, for example, is performed, this operation can be disabled.

Further, when a disabled state, that is, a state in which a part is disabled and thus cannot be indicated is provided as a state of the part, the indication or the selection of the disabled part can be prevented.

FIG. 4 shows a graphical user interface screen displayed on the display unit 12. A plurality of parts are used on the graphical user interface screen. Description will be made below of each displayed part.

A one-touch dialing list 121 has other persons registered therein to enable a conference with another registered person to be started easily. In FIG. 4, six display frames P1 to P6 are provided for each group. Thumbnail images of other persons, for example, are displayed in the display frames to enable easy selection of a desired person from the one-touch dialing list 121.

A group selecting button 122 is to change a list of other persons displayed in the one-touch dialing list 121 for each group.

An address book button 123 is to display an address book screen showing a list of registered other persons in order of name, order of address or the like on the screen of the display unit 12 to allow easy selection of a desired person.

An outgoing call and incoming call history button 124 is to display a communication log of outgoing calls and incoming calls and the like.

A number input area 125 is to directly input the connection destination information (for example a telephone number, an IP address or the like) of another person when the other person is not registered in the address book. In this case, when the connection destination information of another person is input, a software keyboard is used, as will be described later.

A dialing button 126 starts a connection using the connection destination information input in the number input area 125.

A menu bar display button 127 is to display a setting menu. The setting menu includes for example an outgoing call setting menu for setting attributes such as a line to be used at a time of an outgoing call, a compression system and the like, an incoming call setting menu for setting attributes of whether to make automatic response or manual response at a time of an incoming call, a general setting menu for setting the name of the own self, a date and time, an audio setting menu, and a network setting menu.

A video display area 128 displays a picked-up image of the own self while connection to another person is not made. The video display area 128 displays a picked-up image of another person after connection to the other person is established.

A system status indicator 129 displays the information on the connection destination of the two-way communication apparatus 10 and information on the loading state of recording media and the like.

Operation when operations are performed using the pointing device and operation when operations are performed using the keyboard will next be described individually. Incidentally, description will be made supposing that a pointer indicates a position on the screen when the pointing device is used, and that a cursor indicates a position on the screen when the keyboard is used.

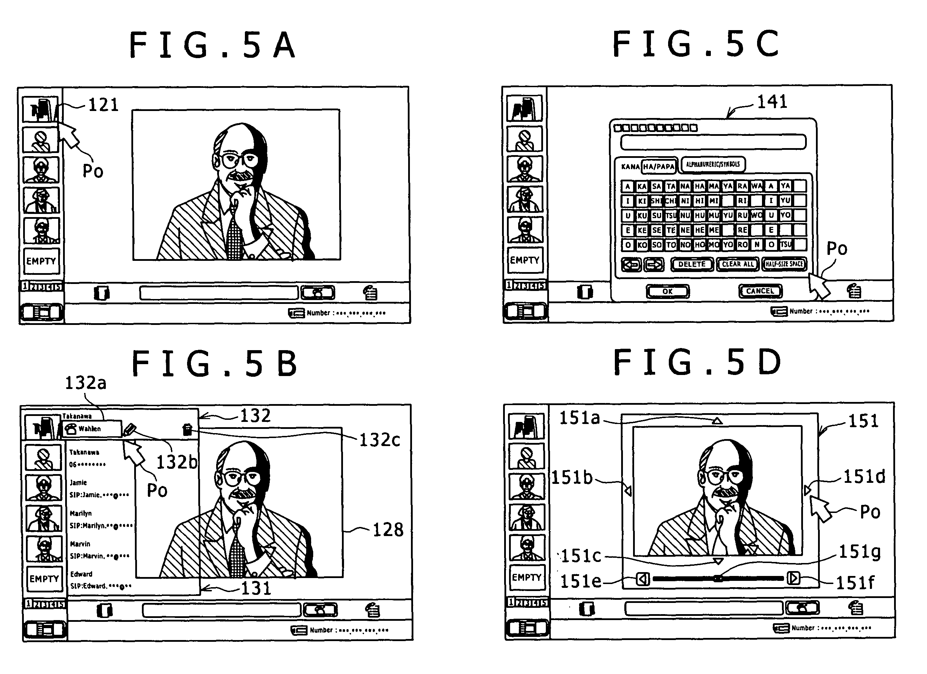

In the case of using the pointing device, when a user operation is performed to set the pointer Po at a position in the area of the one-touch dialing list 121 and set the pointer Po in a focus state as shown in FIG. 5A, that is, when a user operation is performed to indicate the one-touch dialing list 121, the control unit 50 makes a pop-up display 131 showing information on other persons registered in a one-touch button list, as shown in FIG. 5B. In the pop-up display 131, the names and connection destinations of the registered other persons are displayed as the information on the other persons.

When a user operation is thereafter performed to indicate information on a desired person from the pop-up display 131 by the pointer Po, the control unit 50 makes a pop-up menu display 132 for the indicated person, and enables only items within the pop-up menu display 132 to be indicated and sets other buttons and the like in a disabled state to prohibit the other buttons and the like from being indicated.

The pop-up menu display 132 has a calling button 132a, a one-touch edit button 132b, and a one-touch deletion button 132c. The calling button 132a is to start a connection using the connection destination information of the other person for whom the pop-up menu display 132 is made. The one-touch edit button 132b is to edit the information on the other person for whom the pop-up menu display 132 is made. When the one-touch edit button 132b is selected, the control unit 50 displays a screen (not shown) for editing the information on the other person to allow a correction, an addition, or a deletion of information on a software keyboard to be described later. Incidentally, when the information is edited, information in the address book is also corrected in such a manner as to be interlocked with the editing of the information for consistency of the information. The one-touch deletion button 132c is to delete the other person for whom the pop-up menu display 132 is made from the one-touch dialing list 121.

When the operating key of the pointing device is pushed in a state of the calling button 132a being indicated, that is, when the calling button 132a being indicated is selected, the control unit 50 determines that a calling operation is performed, and performs a process for starting a connection to the other person for whom the pop-up menu display 132 is made. When a video signal of the other person is supplied after the connection, the control unit 50 displays a picked-up image of the other person in the video display area 128.

When the operating key of the pointing device is pushed in a state of the number input area 125 being indicated, that is, when the number input area 125 being indicated is selected, the control unit 50 displays a software keyboard 141 as shown in FIG. 5C. The software keyboard 141 can be switched between a kana input screen and an alphanumeric/symbol input screen, for example. By focusing the pointer Po on the position of a desired character or symbol and pushing the operating key, the character or symbol on which the pointer Po is focused can be input.

When an operation of indicating and selecting the dialing button 126 is performed after completion of input of the connection destination information of another person using the software keyboard, the control unit 50 performs a connection starting process using the connection destination information input in the number input area 125.

When the operating key of the pointing device is pushed in a state of the video display area 128 being indicated, that is, when the video display area 128 being indicated is selected, the control unit 50 displays a camera adjustment frame display 151 as shown in FIG. 5D to allow adjustment of an image pickup direction and an angle of view of the image pickup unit 11 using this display. When a user operation of indicating and then selecting an upward direction display 151a provided in the camera adjustment frame display 151 is performed, the control unit 50 controls the image pickup unit 11 to perform a tilting operation for changing the image pickup direction upward. When a user operation of indicating and then selecting a downward direction display 151c is performed, the control unit 50 controls the image pickup unit 11 to perform a tilting operation for changing the image pickup direction downward.

When a user operation of indicating and then selecting a left direction display 151b provided in the camera adjustment frame display 151 is performed, the control unit 50 controls the image pickup unit 11 to perform a panning operation for changing the image pickup direction to the left. When a user operation of indicating and then selecting a right direction display 151d is performed, the control unit 50 controls the image pickup unit 11 to perform a panning operation for changing the image pickup direction to the right.

The camera adjustment frame display 151 also includes a zoom adjusting display. When a user operation of indicating and then selecting a wide display 151e in the zoom adjusting display is performed, the control unit 50 controls the image pickup unit 11 to reduce a zoom magnification and thereby increase the angle of view. When a user operation of indicating and then selecting a tele display 151f is performed, the control unit 50 controls the image pickup unit 11 to increase the zoom magnification and thereby display an enlarged subject. Incidentally, a display 151g indicates a zoom position.

Thus, it is possible to operate or set the two-way communication apparatus 10 by changing an indicated part by moving the pointer Po according to a user operation and then selecting the indicated part by operating the key of the pointing device.

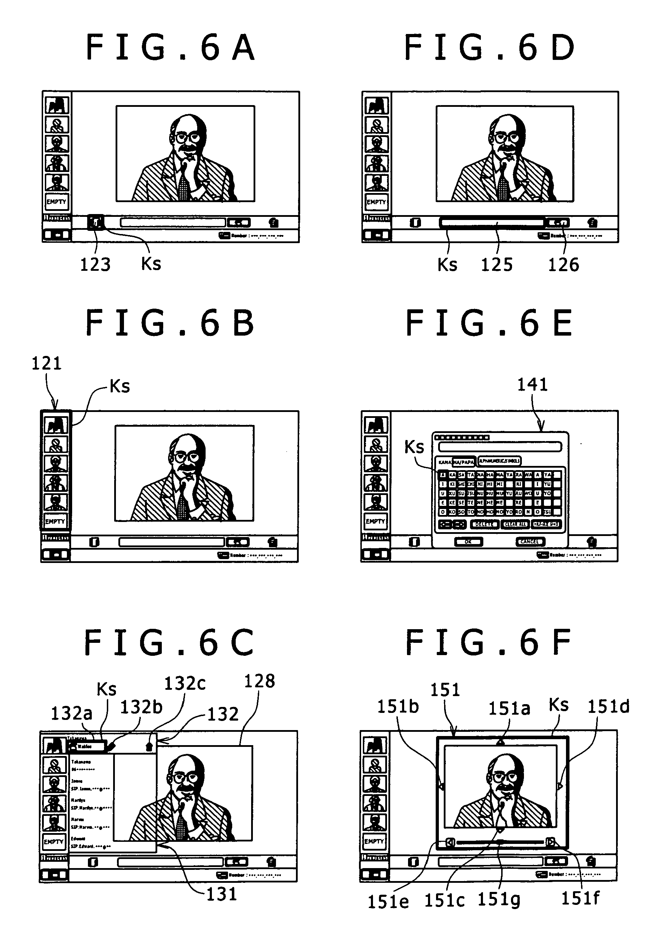

Description will next be made of operation when the keyboard, for example the remote control device 60 having a keyboard function as described above is used. On the first top screen, the cursor Ks is set at the position of the address book button 123, for example, as shown in FIG. 6A.

When the left direction cursor moving key 61b is operated, the control unit 50 moves the cursor Ks from the address book button 123 to the one-touch dialing list 121 to indicate the one-touch dialing list 121, as shown in FIG. 6B. When the enter key 62 is thereafter operated, the control unit 50 makes the pop-up display 131 showing information on other persons registered in the one-touch button list. When the upward direction cursor moving key 61a or the downward direction cursor moving key 61c is operated while the pop-up display 131 is made, the control unit 50 sequentially changes a registered other person and indicates a registered other person. As shown in FIG. 6C, the control unit 50 makes the pop-up menu display 132 for the indicated other person. Further, the control unit 50 enables only items within the pop-up menu display to be indicated, and sets other buttons and the like in a disabled state to prohibit the other buttons and the like from being indicated.

When the left direction cursor moving key 61b or the right direction cursor moving key 61d is operated while the pop-up display 131 is made, the control unit 50 moves the cursor Ks according to the user operation to sequentially and cyclically change and indicate the calling button 132a, the one-touch edit button 132b, or the one-touch deletion button 132c. When the enter key 62 is operated in a state of the calling button 132a being indicated, that is, when the calling button 132a being indicated is selected, the control unit 50 determines that a calling operation is performed, and performs a process for starting a connection to the other person for whom the pop-up menu display 132 is made. When a video signal of the other person is supplied after the connection, the control unit 50 displays a picked-up image of the other person in the video display area 128.

When the right direction cursor moving key 61d is operated while the cursor Ks is at the position of the address book button as shown in FIG. 6A, the control unit 50 moves the cursor Ks to the number input area 125 to indicate the number input area 125 as shown in FIG. 6D. Then, when the enter key 62 is operated in a state of the number input area 125 being indicated, that is, when the number input area 125 being indicated is selected, the control unit 50 displays a software keyboard 141 as shown in FIG. 6E. The software keyboard 141 can be switched between a kana input screen and an alphanumeric/symbol input screen, for example. By moving the cursor Ks to the position of a desired character or symbol or the like and operating the enter key, the character or symbol or the like indicated by the cursor Ks can be input. Then, the operation of the software keyboard is ended.

When an operation of indicating and selecting the dialing button 126 is performed after completion of input of the connection destination information of another person using the software keyboard, the control unit 50 performs a connection starting process using the connection destination information input in the number input area 125.

When the upward direction cursor moving key 61a is operated while the cursor Ks is at the position of the address book button as shown in FIG. 6A, the control unit 50 displays the camera adjustment frame display 151 as shown in FIG. 6F, and indicates the camera adjustment frame display 151 by the cursor Ks. Further, when the enter key 62 is operated in a state of the camera adjustment frame display 151 being indicated, that is, when the camera adjustment frame display 151 being indicated is selected, the control unit 50 enables adjustment of an image pickup direction and an angle of view of the image pickup unit 11 using the camera adjustment frame display 151. In this case, when the camera adjustment frame display 151 is selected, the cursor Ks is set at the position of one of the upward direction display 151a, the left direction display 151b, the downward direction display 151c, and the right direction display 151d, for example. In addition, one of the upward direction display 151a, the left direction display 151b, the downward direction display 151c, the right direction display 151d, the wide display 151e, and the tele display 151f is allowed to be indicated according to an operation of a key of the cursor moving key 61.

When a user operation of indicating and then selecting the upward direction display 151a provided in the camera adjustment frame display 151 is performed on the remote control device 60, the control unit 50 controls the image pickup unit 11 to perform a tilting operation for changing the image pickup direction upward. When a user operation of indicating and then selecting the downward direction display 151c is performed on the remote control device 60, the control unit 50 controls the image pickup unit 11 to perform a tilting operation for changing the image pickup direction downward.

When a user operation of indicating and then selecting the left direction display 151b provided in the camera adjustment frame display 151 is performed on the remote control device 60, the control unit 50 controls the image pickup unit 11 to perform a panning operation for changing the image pickup direction to the left. When a user operation of indicating and then selecting the right direction display 151d is performed on the remote control device 60, the control unit 50 controls the image pickup unit 11 to perform a panning operation for changing the image pickup direction to the right.

Further, when a user operation of indicating and then selecting the wide display 151e is performed on the remote control device 60, the control unit 50 controls the image pickup unit 11 to reduce the zoom magnification and thereby increase the angle of view. When a user operation of indicating and then selecting the tele display 151f is performed on the remote control device 60, the control unit 50 controls the image pickup unit 11 to increase the zoom magnification and thereby display an enlarged subject.

Thus, it is possible to operate or set the two-way communication apparatus 10 by changing an indicated part by moving the cursor Ks according to a user operation of the cursor moving key 61 and then selecting the indicated part by the enter key 62.

The operation that can be performed using either of the pointing device and the keyboard is not limited to the operation for performing two-way communication with a desired other person using an address book as shown in FIGS. 5A to 5D and FIGS. 6A to 6F. Menu selecting operation will next be described as operation that can be performed using either of the pointing device and the keyboard.

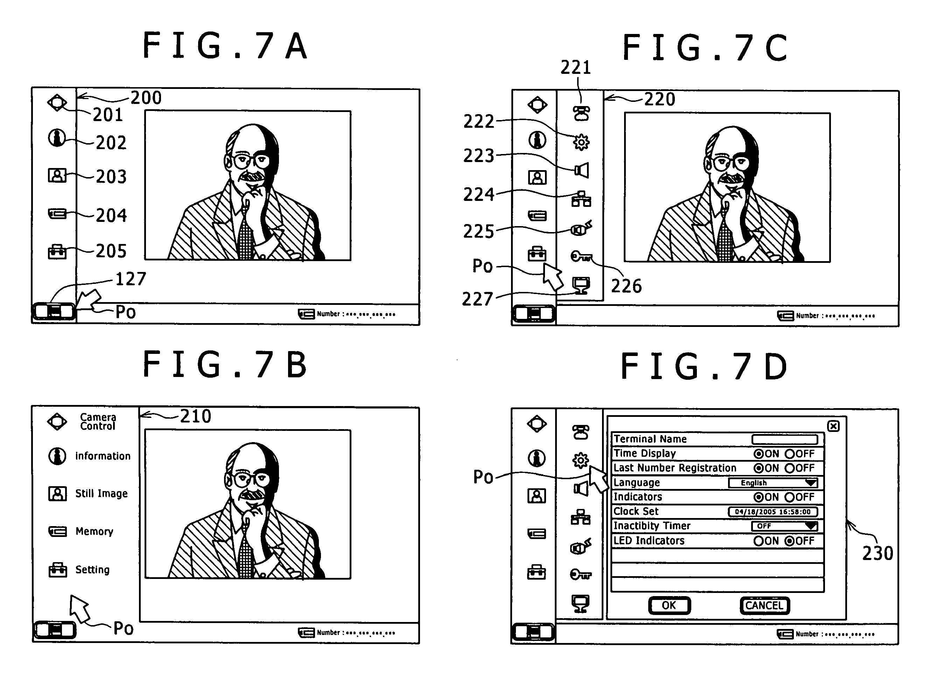

FIGS. 7A, 7B, 7C, and 7D show menu selecting operation using the pointing device. In the case of using the pointing device, when the pointer Po is set at a position in the area of the menu bar display button 127 and set in a focus state, and thereafter a push operation is performed, that is, when a user operation of selecting the menu bar display button 127 is performed, the control unit 50 makes a menu bar display 200 in place of the one-touch dialing list 121, as shown in FIG. 7A.

The menu bar display 200 includes a camera control button 201, a status and information button 202, a still image button 203, a recording media load display 204, and a setting button 205. The camera control button 201 is to display the camera adjustment frame display 151 or the like as shown in FIG. 5D so that the image pickup direction and the angle of view of the image pickup unit 11 can be adjusted by using this display. The status and information button 202 is to display information on the two-way communication apparatus 10, the status of a line during communication, and the like. The still image button 203 is to store an image during communication as a still image on the recording media loaded in the external memory interface unit 53, and to display a still image stored on the recording media. The recording media load display 204 makes it possible to determine whether recording media are loaded in the external memory interface unit 53. The setting button 205 is to make various settings of the two-way communication apparatus 10, settings for communication, screen display settings, and the like.

When a user operation for setting the pointer Po at a position of the menu bar display 200 as shown in FIG. 7B is performed, the control unit 50 makes a pop-up display 210 describing functions of the camera control button 201, the status and information button 202, the still image button 203, the recording media load display 204, and the setting button 205.

When a user operation is thereafter performed to set the pointer Po at the position of one of the buttons in the pop-up display 210 and set the pointer Po in a focus state, that is, when a user operation is performed to indicate one of the buttons by the pointer Po, the control unit 50 makes a pop-up menu display for the indicated button, and enables only items within the pop-up menu display to be indicated and sets other buttons and the like in a disabled state to prohibit the other buttons and the like from being indicated. For example, when the setting button 205 is indicated, a pop-up menu display 220 for the setting button 205 is made, as shown in FIG. 7C, and the other buttons and the like are set in a disabled state.

The pop-up menu display 220 includes an incoming call setting button 221, a device setting button 222, an audio setting button 223, a network setting button 224, a communication mode setting button 225, an administrator setting button 226, and a display setting button 227. The incoming call setting button 221 is to set an operation at a time of an incoming call. The device setting button 222 is to make a time setting and device-related settings for indicator display and the like. The audio setting button 223 is to make audio-related settings for the microphone and the like. The network setting button 224 is to make network-related settings and settings related to a call control protocol such as SIP (Session Initiation Protocol) or the like. The communication mode setting button 225 is to select a compression system for video and audio. The administrator setting button 226 is used when setting is made on setting items limited to an administrator. The display setting button 227 is to set image quality and a display mode.

For example, when the pointer Po is set at the position of the device setting button 222 in the pop-up menu display 220 and is set in a focus state, and thereafter a push operation is performed, that is, when a user operation of selecting the device setting button 222 is performed, the control unit 50 makes a device setting menu display 230 as shown in FIG. 7D to allow setting on various items.

Thus, it is possible to make various settings for the two-way communication apparatus 10 by changing an indicated part by moving the pointer Po according to a user operation and then selecting the indicated part by operating the key of the pointing device.

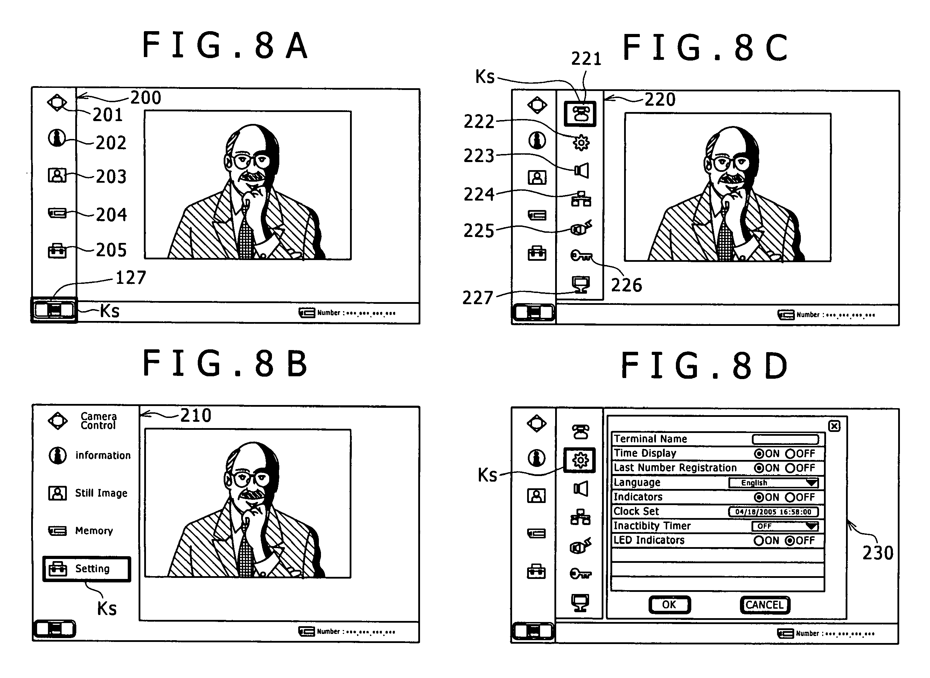

Menu selecting operation using the keyboard will next be described with reference to FIGS. 8A, 8B, 8C, and 8D. On a first top screen, the cursor Ks is set at the position of the address book button 123, for example. When the downward direction cursor moving key 61c is operated, the control unit 50 moves the cursor Ks from the address book button 123 to the menu bar display button 127 to indicate the menu bar display button 127. When the enter key 62 is thereafter operated, the control unit 50 determines that a user operation of selecting the menu bar display button 127 is performed, and makes the menu bar display 200 in place of the one-touch dialing list 121, as shown in FIG. 8A.

When the upward direction cursor moving key 61a is operated while the menu bar display 200 is made, the control unit 50 moves the cursor Ks to a position within the menu bar display 200, and makes the pop-up display 210 describing functions of buttons and displays as shown in FIG. 8B. In addition, the control unit 50 sequentially changes and indicates the buttons and displays provided within the menu bar display 200 according to an operation of the upward direction cursor moving key 61a or the downward direction cursor moving key 61c.

When a predetermined time has passed after the cursor Ks is set at the position of a desired button, or when the cursor Ks is set at the position of a desired button and the enter key 62 is operated, the control unit 50 makes a pop-up menu display for the button at which the cursor Ks is positioned. For example, when the cursor Ks is at the position of the setting button 205, the control unit 50 makes the pop-up menu display 220 for the setting button 205 as in the case of FIG. 7C. When the right direction cursor moving key 61d is operated while the pop-up menu display 220 is made, the control unit 50 moves the cursor Ks to the position of for example the first incoming call setting button 221 in the pop-up menu display 220 as in the case of FIG. 7C.

When the upward direction cursor moving key 61a or the downward direction cursor moving key 61c is operated with the cursor Ks positioned in the pop-up menu display 220, the control unit 50 moves the cursor Ks according to the user operation to sequentially and cyclically change and indicate the buttons within the pop-up menu display 220.

When the enter key 62 is operated while the cursor Ks is positioned at the device setting button 222, that is, when an operation of selecting the device setting button 222 is performed while the device setting button 222 is indicated by the cursor Ks, the control unit 50 makes the device setting menu display 230 as shown in FIG. 8D to allow setting on various items.

Thus, since the menu bar display 200, the pop-up menu display 220, the device setting menu display 230 and the like are hierarchically displayed, various operations and settings can be made efficiently without occupying a large display area on the screen.

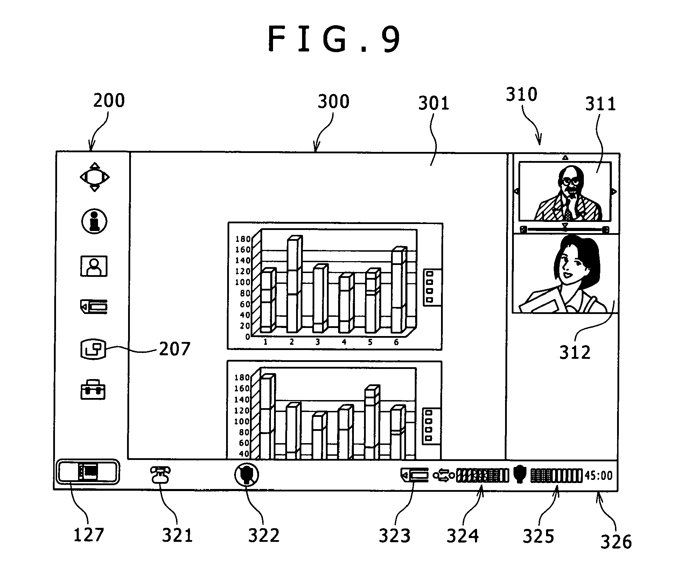

A call screen shown in FIG. 9, for example, is displayed on the display unit 12 while a two-way communication is performed with a desired other person after operation and setting are performed using the pointing device or the keyboard as described above. Incidentally, FIG. 9 shows a state in which the menu bar display 200 is displayed.

The call screen includes a plurality of display screens. A parent screen 300 displays one of an image of the own self, an image of another person, a still image recorded on the recording media, a still image transmitted from the other person, and the like. Alternatively, these images are displayed in a changeable manner. A child screen 310 makes a screen display different from that of the parent screen 300, for example. Incidentally, FIG. 9 shows a still image 301 displayed as the parent screen 300, and an own self image 311 and another person image 312 displayed as the child screen 310. The above-described camera adjustment frame display is displayed together with the display of the own self image 311 so that the image pickup direction can be adjusted while the own self image is picked up.

The call screen also includes a disconnection button 321, a microphone switch button 322, a recording media display 323, a communication quality display 324, a microphone level display 325, and a call elapsed time display 326. The disconnection button 321 is to end a call. The microphone switch button 322 is to change a microphone function to an on state or an off state. The recording media load display 323 is similar to the above-described recording media load display 204. The call elapsed time display 326 indicates a call elapsed time.

The communication quality display 324 enables a communication quality state to be determined. The communication unit 40 measures a packet error rate, for example. The communication unit 40 supplies a result of the measurement to the display driving unit 28 or the control unit 50 for display control of the communication quality display 324. The communication quality display 324 is a bar display divided into a red bar, a yellow bar, and a green bar, for example. When the packet error rate is good, all of the red bar, the yellow bar, and the green bar are displayed. When the packet error rate is deteriorated, the number of displayed bars is reduced; for example the red bar and the yellow bar are displayed. When the packet error rate is further deteriorated, only the red bar is displayed. When the packet error rate is further deteriorated, no bar is displayed. The number and the colors of the displayed bars are thus controlled according to the communication quality state, whereby the communication quality state can be determined easily.

The microphone level display 325 indicates the level of a microphone signal when the microphone function is in an on state. Using this microphone level display 325, a distance to the microphone 13 is increased or decreased or the gain of the microphone signal is adjusted so as to attain an appropriate level of the microphone signal. Thus, an audio signal having an appropriate signal level can be transmitted to the destination of another person. Incidentally, the disconnection button 321 and the microphone switch button 322 of the call screen can also be indicated or selected by using the pointing device, the keyboard and the like. Incidentally, the call screen includes a screen layout setting button 207 for setting a screen layout in the menu bar display 200.

In the operation for performing two-way communication with a desired other person using an address book and the menu selecting operation, the one-touch dialing list 121, the pop-up menu displays 132 and 220, the menu bar display 200, the pop-up display 210 and the like displayed on the screen are displayed transparently. Such transparent display enables a screen in a lower layer to be distinguished even when the one-touch dialing list 121, the pop-up menu displays 132 and 220, the menu bar display 200, the pop-up display 210 and the like are displayed.

As described above, when one of changing of an indicated part and selection of an indicated part is performed selectively in response to a user operation, even in the case of using either the pointing device or the keyboard, the part of the graphical user interface can be operated similarly, and thus the two-way communication apparatus can be operated or set easily. In addition, since a graphical user interface when the pointing device is used and a graphical user interface when the keyboard is used do not need to be provided separately from each other, graphical user interface design can be performed efficiently, and it is therefore possible to prevent the lengthening of a design period and an increase in the number of man-hours for design. Further, it becomes possible to provide the two-way communication apparatus at a low cost.

It is to be noted that the parts used in the above-described graphical user interface, the arrangements of the parts, the operations when the pointer Po or the cursor Ks is operated are illustrative, and are of course not limited to the above-described forms.

It should be understood by those skilled in the art that various modifications, combinations, subcombinations and alterations may occur depending on design requirements and other factors insofar as they are within the scope of the appended claims or the equivalents thereof.

## Claims

1. A graphical user interface device comprising:
a display unit (12) for displaying a part of a graphical user interface;
an operation input unit (51) for receiving a user operation; and
a control unit (15) for performing a process corresponding to said part according to said user operation;
wherein said control unit (15) selectively performs one of changing of an indicated part and selection of an indicated part in response to said user operation, and when a part is selected, said control unit (15) performs a process corresponding to the selected part.

2. The graphical user interface device as claimed in claim 1,
wherein said control unit (15) limits a state of said part to states corresponding only to the changing of said indicated part and the selection of said indicated part.

3. The graphical user interface device as claimed in claim 1 or 2,
wherein the process corresponding to said part does not need user operations of other than change and selection.

4. An operating input processing method in an interface device, said interface device including
a display unit for displaying a part of a graphical user interface,
an operation input unit for receiving a user operation, and
a control unit for performing a process corresponding to said part according to said user operation, said operating input processing method comprising the steps of:
said control unit selectively performing one of changing of an indicated part and selection of an indicated part in response to said user operation; and
when a part is selected, said control unit performing a process corresponding to the selected part.

5. A two-way communication apparatus (10) comprising:
an image pickup unit (11);
a communication unit (40) for transmitting a video signal obtained by performing image pickup by said image pickup unit (11) to another person, and receiving a video signal from the other person;
a display unit (12) for displaying an image on a basis of said video signals;
an operation input unit (51) for receiving a user operation; and
a control unit (50);
wherein a part of a graphical user interface is displayed on said display unit (12), and
said control unit (50) selectively performs one of changing of an indicated part and selection of an indicated part in response to said user operation, and when a part is selected, said control unit (50) performs at least a process of communicating said video signal as a process corresponding to the selected part.
